# EUROPÄISCHE PATENTSCHRIFT

(11) **EP 1 574 400 B1**
(45) Veröffentlichungstag und Bekanntmachung des Hinweises auf die Patenterteilung: **21.06.2006**
(21) Anmeldenummer: 05010451.2
(22) Anmeldetag: 10.04.2002
(51) Int. Cl.: B60R 21/01

(54) **Verfahren zum Ansteuern eines reversiblen Insassenschutzmittels in einem Kraftfahrzeug**
Method for actuating a reversible occupant protection system in a motor vehicle
Procédé pour actionner un moyen de protection réversible d'un occupant dans un véhicule automobile

(30) Priorität: 02.05.2001 DE 10121386
(43) Veröffentlichungstag der Anmeldung: 14.09.2005
(62) Teilanmeldung aus: 02732590.1
(73) Patentinhaber: DaimlerChrysler AG, 70567 Stuttgart (DE)
(72) Erfinder: Eberle, Walter, 73269 Hochdorf (DE); Hinrichs, Wolfgang, 70794 Filderstadt (DE); Justen, Rainer, 71155 Altdorf (DE); Mammel, Bernd, 71083 Herrenberg (DE); Röhm, Hans, 72218 Wildberg-Sulz (DE); Villino, Guido, 71229 Leonberg (DE); Woldrich, Markus, 71254 Ditzingen (DE)

(56) Entgegenhaltungen:
- EP-A- 0 430 813
- EP-A- 0 649 776
- EP-A- 0 747 272
- DE-A- 19 708 508

## Beschreibung

Die Erfindung betrifft ein Verfahren zum Ansteuern eines reversiblen Insassenschutzmittels in einem Kraftfahrzeug gemäß dem Oberbegriff des Patentanspruchs 1. Ein solches Verfahren ist aus EP 0430813 A bekannt.

In heutigen Kraftfahrzeugen werden ansteuerbare Rückhaltemittel wie Sicherheitsgurt und Airbag eingesetzt, um die Unfallfolgen für einen Fahrzeuginsassen zu mildern. Verfahren zum Ansteuern dieser Rückhaltemittel in einem Kraftfahrzeug sind aus der Praxis und aus vielen Druckschriften bekannt.

Neben den gängigen Rückhaltemitteln wie Airbag und Sicherheitsgurt mit Gurtstraffer gibt es eine Reihe weiterer ansteuerbarer Insassenschutzmittel, welche eine Rückhaltewirkung und/oder eine energieabsorbierende Wirkung zum Schutze eines Insassen bei einer Kollision entfalten. Beispiele für solche Insassenschutzmittel sind verfahrbare Prallkörper, Kissen und Kopfstützen, welche mittels einer Ansteuerung in Größe, Härte, Form und Lage verändert werden können. Neben diesen Insassenschutzmitteln können zur Verminderung der Unfallschwere weitere ansteuerbare Schutzmittel vorgesehen werden, welche die Unfallfolgen für einen Fahrzeuginsassen vermindern, indem der Insasse positioniert wird, das heißt, er wird in eine für einen Unfall günstige Stellung gebracht. Mittel zum Positionieren des Insassen sind beispielsweise eine elektrische Sitzverstellung, eine Kopfstützenverstellung, Sicherheitsgurtstraffer und verfahrbare Polster.

In Kraftfahrzeugen können zur Milderung von Unfallfolgen auch ansteuerbare Schutzmittel vorgesehen werden, welche auch dem Schutz von Kollisionspartnern, insbesondere dem Schutz von Fußgängern und Radfahrern dienen. Beispiele hierfür sind verstellbare Motorhauben, verfahrbare Stoßfänger und härteverstellbare Prallelemente an der Fahrzeugaußenhaut. Weitere ansteuerbare Schutzmittel sind die Niveauregulierung und das Brems- und Lenksystem mittels derer ein Aufprall in Richtung geringerer Verletzungsschwere der Insassen und/oder der Kollisionspartner optimiert werden kann. Diese Mittel sind im Folgenden nicht als Insassenschutzmittel im Sinne der vorliegenden Erfindung zu verstehen.

Bei der Ansteuerung von Schutzmitteln zur Verminderung der Unfallfolgen im Straßenverkehr kann unterschieden werden zwischen vorbeugenden Maßnahmen, welche vor einem Unfall ergriffen werden, und akuten Maßnahmen, welche nach einem erkannten Unfall ergriffen werden. Die Erfindung bezieht sich auf eine Ansteuerung von Schutzmitteln als vorbeugende Maßnahme.

Aus dem Stand der Technik sind bereits einige Verfahren zum vorbeugenden Ansteuern von Schutzmitteln bekannt, bei denen Fahrzustandsdaten erfasst und hinsichtlich einer Notbremsung oder hinsichtlich einer kritischen Querdynamik ausgewertet werden, um einen kritischen Zustand zu erkennen, bei dem Schutzmittel angesteuert werden sollen.

In der US 4258931 ist ein eingeschränkt reversibles Schutzsystem in Gestalt eines Luftsacks für ein Kraftfahrzeug beschrieben, welches im Vorfeld einer Kollision in Abhängigkeit des Bremsdrucks angesteuert wird. Hierzu ist im Hydraulikkreislauf des Bremssystems ein Drucksensor vorgesehen, welcher den Hydraulikdruck erfasst, und mittels dem auf eine Notfallsituation geschlossen wird. Im Falle einer Notfallsituation wird ein Ventil angesteuert, um die Befüllung des Luftsacks zu bewirken. Führt die Notfallsituation nicht zu einem Unfall, so entlüftet der Fahrer den Airbag manuell mit Hilfe eines Schalters. Findet ein Unfall statt, ohne dass im Vorfeld des Unfalls eine Notfallsituation erkannt wurde, so wird der Luftsack mittels unfallerkennenden Sensoren ausgelöst.

Aus der DE 195 24 358 C1 ist es bekannt bei abrupten Vollbremsungen und unter Berücksichtigung der Fahrzeuggeschwindigkeit die Warnblinkanlage, eine Aufprallschutzvorrichtung und einen Gurtstraffer anzusteuern. Es ist erwähnt während einer Panikbremsung präventiv wirkende Sicherheitsvorrichtungen auszulösen. Es wird beispielsweise während einer erkannten Panikbremsung der Sicherheitsgurt präventiv angestrafft. Zur Erkennung einer Panikbremsung werden die Impulsfolgen von Raddrehzahlsensoren hinsichtlich einer beginnenden Bremsverzögerung ausgewertet.

Aus der DE 198 01 009 C1 ist ein Verfahren zur Einleitung eines automatischen Bremsvorgangs bekannt, bei dem gleichzeitig auch ein Gurtstraffer aktiviert wird. Mit Sensoren zur Erfassung von auf Not-/Stresssituation hinweisenden Körperreaktionen des Fahrers und Sensoren, welche die Gas- und/oder Bremspedalstellung des betätigenden Fußes des Fahrers erfassen, wird auf eine Notbremssituation geschlossen.

In der EP 0747 272 A2 ist ein Insassenrückhaltesystem beschrieben, bei dem einzelne Komponenten, wie z.B. eine elektromotorischer Gurtstraffer, vorbeugend angesteuert werden, wenn die Fahrzeugdaten eine kritische Dynamik anzeigen, indem ein zugeordneter Schwellwert überschritten wird. Zur Erkennung einer kritischen Dynamik werden Signale eines Antiblockiersystems (ABS), einer Antischlupfregelung, eines automatischen Stabilitätssystems oder eines intelligenten Unfallvermeidungssystems ausgewertet, wie z.B. Raddrehzahlen, Radschlupf oder Gierrate. Alternativ kann auch das Signal eines Bremslichtschalters ausgewertet werden.

In der DE 198 11 865 A1 ist Verfahren zum Ansteuern einer Insassenschutzeinrichtung beschrieben, bei dem Fahrdynamiksicherheitssysteme, wie Antiblockiersystems (ABS) oder Fahrdynamik-Regelsysteme nicht nur das Bremssystem ansteuern sondern auch die Insassenschutzeinrichtung in einen Aktivzustand versetzen. Beispielsweise kann ein Gurt elektromotorisch gestrafft werden, sobald ein Fahrdynamik-Sicherheitssystem bei einer beginnenden Instabilität in Tätigkeit tritt. Kennzeichnend für eine beginnende Instabilität des Fahrzeugs sind eine große Abweichung zwischen gemessener Gierrate und Soll-Gierrate, welche aus Lenkwinkel und der Fahrzeuggeschwindigkeit ermittelt wird, sowie ein großer Schwimmwinkel. Der Schwimmwinkel (Winkel zwischen Geschwindigkeitsvektor des Fahrzeugschwerpunktes und der Fahrzeuglängsachse) wird mittels eines mathematischen Fahrzeugmodells aus gemessenen Größen wie Lenkwinkel, Querbeschleunigung und Gierrate hergeleitet.

In der DE 19708508 A1 ist ein Fahrdynamikregelsystem beschrieben, bei dem im Zusammenhang der Ermittlung einer von der Fahrbahnquerneigung abhängigen Querbeschleunigungskomponente, das Produkt aus Schwimmwinkeländerung und Gierrate ausgewertet wird, um auf ein Übersteuern und/oder eine Steilkurvenfahrt zu schließen.

Auch in der DE 42 000 61 A1 in Zusammenhang mit Fahrdynamikregelsystemen beschrieben wie der Schwimmwinkel aus den Raddrehzahlen, Lenkwinkel, Gierwinkelgeschwindigkeit und Querbeschleunigung geschätzt werden kann.

In der älteren aber nach dem Prioritätstag der vorliegenden Anmeldung veröffentlichten DE 199 61 799 A1 ist ein Sicherheitssystem für ein Kraftfahrzeug beschrieben, bei dem abhängig von Signalen einer Precrash-Sensorik verschiedene Sicherheitseinrichtungen reversibel kurzzeitig betätigt werden. Von der Sensorik erfassbare kritische Zustände können eine Vollbremsung, Schleudern, das Ein- und/Ausfedern eines Rades zur Überschlagserkennung, die Lenkwinkelgeschwindigkeit und unterschiedliche Reibwerte an den Rädern gegenüber der Fahrbahn sein. Auch externe Unfallgefahren, wie sich dem Fahrzeug nähernde Objekte, können von der Precrash-Sensorik erfasst werden.

In der älteren aber nach dem Prioritätstag der vorliegenden Anmeldung veröffentlichten DE 100 05 010 A1 ist ein Verfahren zur Ansteuerung eines reversiblen Gurtstraffers in einem Kraftfahrzeug beschrieben, bei dem Fahrzustandsdaten ausgewertet werden. Bei einer Notbremsung, die durch eine entsprechende Betätigung des Gaspedals und/oder des Bremspedals und durch Detektion eines Objektes mit vorausschauender Sensorik oder durch den Bremsassistenten ausgelöst wird, wird der Gurtstraffer aktiviert, wodurch das Insassenschutzsystem vor dem Kollisionszeitpunkt ausgelöst und in Wirkstellung gebracht wird. Ein kritischer Fahrzustand wird auch durch Überwachung von Lenkwinkel, Gierwinkel, -geschwindigkeit, -beschleunigung, Eigengeschwindigkeit, Lenkwinkel, starken Richtungswechseln, Querbeschleunigung, Raddrehzahl und/oder Neigungswinkel oder einer beliebigen Kombination dieser Parameter erkannt und dient zur Beeinflussung des Auslösealgorithmus für den reversiblen Gurtstraffer. Mit diesen Parametern wird die Fahrzeugbewegung in seitlicher Richtung bestimmt. Tritt eine Abweichung von der durch den Fahrer vorgegebenen Fahrzeugrichtung auf, so wird der Gurtstraffer angesteuert.

Auch in der älteren aber nach dem Prioritätstag der vorliegenden Anmeldung veröffentlichten DE 100 29 061 A1 ist ein Verfahren zur Ansteuerung eines reversiblen Gurtstraffers in einem Kraftfahrzeug beschrieben, bei dem Fahrzustandsdaten ausgewertet und mit zugeordneten Schwellwerten verglichen werden. Bei einer Schwellwertüberschreitung wird ein elektromotorischer Gurtstraffer ausgelöst. Die beobachteten Fahrzustandsdaten sind Bremsdruck, Bremsdruckgradient, Gierwinkelgeschwindigkeit, Gierwinkelbeschleunigung, Querbeschleunigung und Längsbeschleunigung. Die Schwellwerte sind abhängig von dem Lenkwinkel und der Eigengeschwindigkeit.

Aufgabe der Erfindung ist es, die Unfallfolgen im Straßenverkehr zu vermindern. Diese Aufgabe wird erfindungsgemäß durch die Merkmale des Anspruchs 1 gelöst.

Vorteil des erfindungsgemäßen Verfahrens ist, dass mittels der Nutzung bereits im Fahrzeug vorhandener Sensorik und ohne Hinzuziehen von Umgebungsdaten ein großer Teil der Unfallsituationen bereits vor der Kollision erkannt wird und darauf basierend mittels einer Ansteuerung reversibler Schutzsysteme die Insassensicherheit wesentlich erhöht wird.

Die Sensorik zur Erfassung von Fahrzustandsdaten umfasst beispielsweise einen Lenkwinkelsensor, einen Pedalwegsensor, einen Bremsdrucksensor, Raddrehzahlsensoren, Beschleunigungssensoren und einen Gierratensensor. Der Lenkwinkelsensor erfasst den Lenkwinkel am Lenkrad, wobei dieser Lenkwinkel, ebenso wie der Pedalweg eine Sollgröße des Fahrbetriebs darstellt. Dagegen sind beispielsweise die erfassten Beschleunigungen, die Gierrate und die Raddrehzahlen Ist-Größen des Fahrbetriebs. Ein reversibles Insassenschutzmittel ist ein Mittel, dessen Zweck es ist, die Belastung eines Kraftfahrzeuginsassen im Falle einer Kollision zu vermindern, wobei das Schutzmittel mehrmals vom Ausgangszustand in einen Wirkzustand gebracht, und aus dem Wirkzustand wieder in seinen Ausgangszustand zurückversetzt werden kann.

Der Zustand Untersteuern des Fahrzeugs bedeutet, dass der Radius der durch den Lenkwinkel vorgegebenen Sollbahn des Fahrzeugs kleiner als der Radius der tatsächlich durchfahrenen Bahn des Fahrzeugs ist. Dagegen bedeutet ein Übersteuern des Fahrzeugs, dass der Radius der durch den Lenkwinkel vorgegebenen Sollbahn größer als der Radius der tatsächlich durchfahrenen Bahn ist. Unter der durch den Lenkwinkel vorgegebenen Sollbahn ist die Trajektorie des Fahrzeugs zu verstehen, welche entsteht wenn das Fahrzeug mit dem zu betrachtenden Lenkwinkel und mit so kleiner Geschwindigkeit fährt, dass die Querkräfte gegenüber den Längskräften vernachlässigt werden können. Um die Zustände Untersteuern und Übersteuern zu ermitteln, werden die Fahrzustandsdaten herangezogen.

In einer Ausgestaltung des Verfahrens werden die Zustände Untersteuern und Übersteuern ermittelt, indem die Differenz aus einem Winkel, welcher eine tatsächliche Veränderung der Fahrtrichtung beschreibt, und dem Lenkwinkel bewertet wird. Diese Bewertung kann in einer einfachen Schwellwertabfrage bestehen, wobei der Schwellwert fest vorgebbar ist, oder es kann der Schwellwert als eine Funktion anderer Parameter, beispielsweise den Straßeneigenschaften oder der Fahrzeugbeladung angepasst werden. Die Zustände Übersteuern und Untersteuern können auch unter Heranziehen zeitlich zurückliegender Werte des fahrtbeschreibenden Winkels und des Lenkwinkels ermittelt werden. Mittels der zurückliegenden Werte der ermittelten Winkel kann die Differenz aus beiden Winkeln als Funktion der Zeit dargestellt und einer Bewertung unterzogen werden. Beispielsweise kann die berechnete Winkeldifferenz über einen vorgebbaren Zeitraum integriert werden, oder es wird die Steigung der Winkeldifferenz bewertet.

Der Winkel, welcher eine Veränderung der tatsächlichen Fahrtrichtung beschreibt kann aus unterschiedlichen Parametersätzen ermittelt werden. Dies kann dazu genutzt werden die Ermittlung eines Zustandes, der zur Auslösung eines Schutzsystems führt zu plausibilisieren. Die mittels einer redundanten Ermittlung eines Auslösezustands erreichte Sicherheit ermöglicht das Ansteuern des Schutzsystems bei niedrigeren Auslöseschwellen und somit zu einem früheren Zeitpunkt. Als Parametersätze zur Ermittlung des Zustandes Untersteuern können beispielsweise die Raddrehzahlen, die Querbeschleunigung und der Radstand, oder in einem anderen Beispiel die Raddrehzahlen, die Giergeschwindigkeit und der Radstand herangezogen werden. Beide Parametersätze sind vorteilhafterweise in modernen Fahrzeugen auf einem Datenbussystem verfügbar. Anstelle der Raddrehzahlen kann auch direkt die Fahrzeuggeschwindigkeit verwendet werden, wobei diese aus den Raddrehzahlen ermittelt werden kann.

Zur Ermittlung des Zustands Übersteuern hat es sich gezeigt, dass der Schwimmwinkel eine hierfür gut geeignete Größe ist, welche ein Übersteuern unmittelbar kennzeichnet. Der Schwimmwinkel kann aus dem verfügbaren Parametersatz Giergeschwindigkeit, Querbeschleunigung und einem der Parameter Raddrehzahlen oder Fahrzeuggeschwindigkeit ermittelt werden, wobei die Fahrzeuggeschwindigkeit wiederum aus den Raddrehzahlen ermittelt werden kann.

Zur zusätzlichen Absicherung des Zustands Übersteuern wird eine Sollgiergeschwindigkeit ermittelt, welche aus der Fahrzeuggeschwindigkeit und dem Lenkwinkel berechnet wird. Falls die Differenz aus Sollgiergeschwindigkeit und Giergeschwindigkeit eine vorgebbare Schwelle übersteigt, wird ebenfalls auf den Zustand Übersteuern geschlossen.

Eine Notbremsung liegt vor, falls ein Bremsvorgang mit mindestens einem Merkmal erfolgt, welches auf eine Gefahren- oder Notsituation hindeutet. Dies ist der Fall, wenn dieses Merkmal (diese Merkmale) signifikant außerhalb eines vorgebbaren Wertebereichs liegt (liegen). Der Zustand Notbremsung wird ermittelt, indem mindestens einer der Parameter Bremsdruck, Geschwindigkeit der Bremspedalbetätigung und Geschwindigkeit der Rücknahme des Gaspedals zur Bewertung des Bremsvorgangs herangezogen wird.

Alternativ zu einer Notbremsung, welche vom Fahrer bewirkt wird, kann eine Notbremsung basierend auf einer Umgebungserfassung automatisiert erfolgen. Ein Signal, welches auf eine automatisierte Notbremsung hinweist, beispielsweise das Steuersignal für das Auslösen der Notbremsung, kann ebenfalls zur Durchführung des erfindungsgemäßen Verfahrens herangezogen werden.

Von der Datenverarbeitungseinrichtung wird fortlaufend überprüft, ob einer der Zustände Notbremsung, Übersteuern oder Untersteuern vorliegt. Ist dies der Fall, so wird das reversible Insassenschutzsystem angesteuert, wobei in Abhängigkeit der Zustände Notbremsung, Übersteuern und Untersteuern die Auslösegeschwindigkeit, die Stellgeschwindigkeit, die Härte und die Wirkrichtung angepasst werden kann. Insbesondere wird die Ansteuerung der Insassenschutzmittel bei gleichzeitigem Vorliegen von mehr als einem der Zustände Notbremsung, Untersteuern und Übersteuern auf eine kombinierte Gefährdung angepasst, wofür ein zusätzlicher Bewertungsalgorithmus vorgesehen werden kann.

Zusätzlich wird mittels den Zuständen Notbremsung, Übersteuern und Untersteuern die Richtung ermittelt, aus welcher eine maximale Gefährdung zu erwarten ist. Das Insassenschutzsystem wird entsprechend der ermittelten Gefährdungsrichtung derart angesteuert, dass die Schutzwirkung entsprechend der Richtung maximaler Gefährdung erfolgt. Durch die kombinierte Betrachtung der Zustände Notbremsung, Übersteuern und Untersteuern ist es möglich, bei Vorliegen von mehr als einem, auf eine Gefährdung hinweisenden Zustand das Schutzsystem in der Weise anzusteuern, dass die Insassenbelastung bei einem Unfall möglichst gering ist.

In einer Weiterbildung des Verfahrens wird das reversible Insassenschutzsystem nur angesteuert, falls das Fahrzeug eine Mindestgeschwindigkeit aufweist. Dies hat den Vorteil, dass eine Ansteuerung der Insassenschutzsysteme bei geringen Geschwindigkeiten verhindert werden kann. Es kann erwünscht sein, unterhalb einer vorgebbaren Geschwindigkeit die Insassenschutzsysteme nicht anzusteuern, da bei einer geringen Geschwindigkeit eine Gefährdung der Insassen, welche mittels den Fahrzustandsdaten erkannt werden kann, vernachlässigbar klein ist.

In einer vorteilhaften Ausgestaltung des Verfahrens wird der Zustand Notbremsung anhand eines Eingriffs in die Fahrdynamik erkannt, welche von einem Bremsassistenzsystem vorgenommen wird. Dieses Bremsassistenzsystem bewertet seinerseits Fahrzustandsgrößen um in Abhängigkeit des Bewertungsergebnisses den Eingriff in die Fahrdynamik vorzunehmen. Der Eingriff des Bremsassistenzsystems in die Fahrdynamik erfolgt durch Senden von Steuersignalen an die Stelleinrichtungen, welche die Fahrdynamik beeinflussen. Diese Steuersignale des Bremsassistenzsystems kann zur Erkennung der Notbremsung herangezogen werden. Alternativ zu den Steuersignalen kann ein anderes Informationssignal, welches vom Bremsassistenzsystem auf einen Datenbus gesandt wird zur Erkennung des Zustands Notbremsung herangezogen werden. Vorteil dieser Ausgestaltung des Verfahrens ist es, dass eine Notbremsung mit besonders geringem Aufwand erkannt wird. Dagegen muss in Kauf genommen werden, dass eine Auslösung der Schutzsysteme an den Algorithmus des Bremsassistenzsystems gekoppelt ist.

In einer weiteren Ausgestaltung des Verfahrens wird das Steuersignal des Bremslichtschalters zur Plausibilisierung der Notbremsung herangezogen. Dieses Signal wird häufig auf einem Datenbus im Fahrzeug bereitgestellt, so dass kein zusätzlicher Verkabelungsaufwand entsteht. Vorteil der mittels dieser Weiterbildung des Verfahrens erreichten Redundanz bei der Erkennung einer Notbremsung ist, dass die Entscheidungssicherheit bei einer Ansteuerung eines reversiblen Schutzsystems erhöht wird.

In einer vorteilhaften Ausgestaltung des Verfahrens umfasst das Schutzsystem eine elektrische Sitzverstellvorrichtung und/oder eine elektrische Verstellvorrichtung von Fahrzeugöffnungen und/oder einen reversibler Gurtstraffer und/oder eine elektrisch verstellbare Prallschutzvorrichtung. Eine elektrische Sitzverstellvorrichtung und elektrische Verstellvorrichtungen von Fahrzeugöffnungen, wie beispielsweise das elektrisch verstellbare Schiebedach und elektrisch verstellbare Fensterheber sind in heutigen Fahrzeugen zumindest teilweise vorhanden und können mit geringem Aufwand zusätzlich zur Vorkonditionierung der Fahrzeuginsassen oder des Fahrzeugs genutzt werden. Alle elektrisch verstellbaren Schutzsysteme haben den Vorteil, dass sich die Energieversorgung über das Bordnetz einfach gestaltet, insbesondere elektromotorische Antriebe ermöglichen auf einfache Weise die Reversibilität der Schutzsysteme. Hierdurch ist es möglich die Schutzsysteme, unter Berücksichtigung ihrer Wirkung auf Fahrer und Insassen, auch dann auszulösen, wenn eine Gefahrensituation ermittelt wird, welche nicht mit hoher Sicherheit, sondern lediglich mit einer gewissen, vorgebbaren Wahrscheinlichkeit zu einer Kollision führt. Eine solche Gefahrensituation zu erkennen leistet das erfindungsgemäße Verfahren, wobei als Vorteil genannt werden soll, dass das Verfahren in einer einfachen Ausführungsform, bereits in heutigen Fahrzeugen ohne zusätzliche Sensorik und ohne zusätzliche Aktuatorik durchgeführt werden kann.

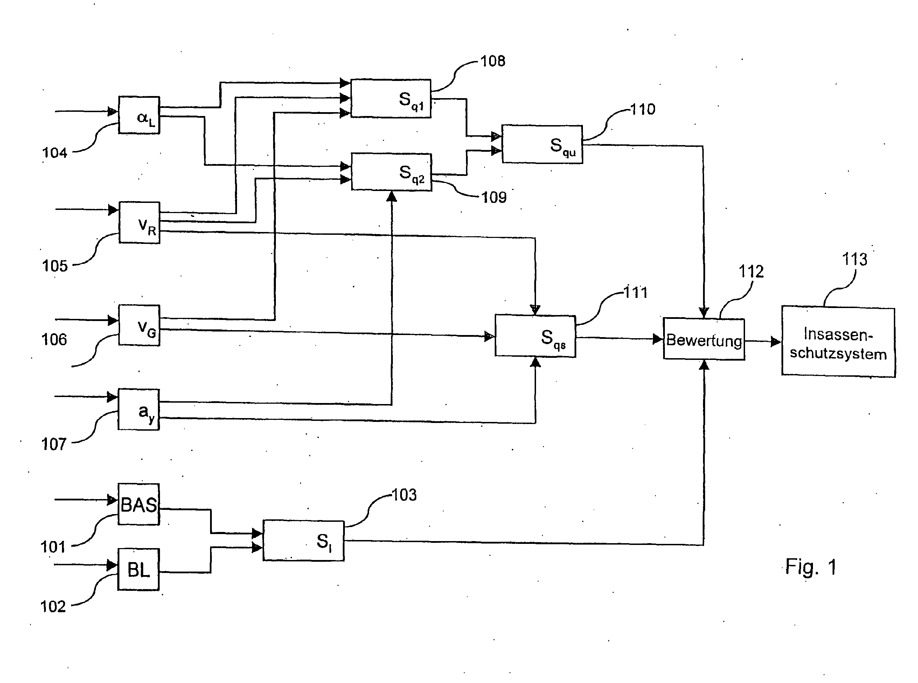

Nachfolgend wird eine vorteilhafte Ausführungsform des erfindungsgemäßen Verfahrens zum Ansteuern eines reversiblen Insassenschutzmittels in einem Kraftfahrzeug anhand der Zeichnung näher beschrieben:

Die einzige Figur zeigt ein Blockschaltbild einer Vorrichtung zur Ausführung einer vorteilhaften Ausführungsform des erfindungsgemäßen Verfahrens.

Zur Ansteuerung eines reversiblen Insassenschutzsystems, werden die Zustände Notbremsung, Untersteuern und Übersteuern überwacht.

Hierzu werden von der Datenverarbeitungseinrichtung, als Eingangsdaten das Steuersignal eines Bremsassistenzsystems BAS und das Steuersignal eines Bremslichtschalters BL herangezogen, und in den Blöcken 101 und 102 daraufhin überprüft, ob sie aktiv sind. Sind beide Signale aktiv, so kann, insbesondere aufgrund der Redundanz, welche mittels der Hinzuziehung des Bremslichtschaltersignals erreicht wird, auf eine Notbremsung geschlossen werden. Das Vorliegen einer Notbremsung führt dazu, dass das Signal Längsschutz S₁ in Block 103 aktiv gesetzt wird. In den Blöcken 104 bis 107 werden der Lenkwinkel α_{L}, die Raddrehzahlen der vier Räder v_{R}, die Giergeschwindigkeit v_{G} und die Querbeschleunigung a_{y}, welche auf einem Datenbus bereitgestellt werden, von der Datenverarbeitungseinrichtung erfasst. Die Giergeschwindigkeit V_{G} ist die einfache zeitliche Ableitung des Gierwinkels, weshalb sie häufig auch als Gierwinkelgeschwindigkeit bezeichnet wird. Aus den Raddrehzahlen V_{R} wird in Block 105 die Fahrzeuggeschwindigkeit V_{F} ermittelt. In einer alternativen Ausführungsform des Verfahrens kann in Block 105 anstelle der Raddrehzahlen V_{R} die Fahrzeuggeschwindigkeit V_{F} erfasst und zur Durchführung des Verfahrens bereitgestellt werden. Falls die Eingangsinformationen der Blöcke 101, 102 und 104 bis 107 nicht über einen Datenbus übermittelt werden, können sie auch über Signalleitungen erfasst werden.

In den Blöcken 108 und 109 wird auf eine Gefahrensituation durch Untersteuern geschlossen: In Block 108 wird aus der Fahrzeuggeschwindigkeit V_{F} und der Giergeschwindigkeit V_{G} ein virtueller Solllenkwinkel berechnet, welcher bei fehlender Zentripedalkraft dazu führen würde, dass sich das Fahrzeug auf einer Bahn mit dem gewünschten Kurvenradius bewegt. Zu dieser Berechnung wird ebenso wie in Block 109 als unveränderliche Größe der Radstand 1 des Fahrzeugs hinzugezogen. Ein solcher virtueller Solllenkwinkel ist der Ackermannwinkel (s. Dubbel, Taschenbuch für den Maschinenbau, 20. Auflage, Q27), welcher in Block 108 vom Lenkwinkel α_{L} abgezogen wird. Ist der Betrag der Differenz zwischen dem virtuellen Solllenkwinkel und dem Lenkwinkel α_{L} größer als ein vorgebbarer Wert, so wird das Signal Querschutzl S_{q1} aktiv gesetzt. Der Ackermannwinkel α_{A} ergibt sich aus den angegebenen Größen in Block 108 wie folgt: α_{A} = (l/v)v_{G}. Parallel zur Überwachung einer Untersteuerung in Block 108 wird in Block 109 ebenfalls auf einen Zustand Untersteuern geschlossen, wobei hierzu ein anderer Parametersatz herangezogen wird. Der Ackermannwinkel wird aus der Fahrzeuggeschwindigkeit V_{F} und der Querbeschleunigung a_{y} berechnet, und ebenfalls vom Lenkwinkel α_{L} abgezogen. Ist der Betrag der Differenz dieser beiden Winkel größer als ein vorgebbarer Wert, so wird das Signal Querschutz2 S_{q2} aktiv gesetzt. Die Berechnung des Ackermannwinkels in Block 109 mittels dem angegebenen Parametersatz ergibt sich als: α_{A} = (l/v²) a_{y}.

In Block 110 werden die Signale Querschutzl S_{q1} und Querschutz2 S_{q2} erfasst und es wird das Signal Querschutz-Untersteuern S_{qu} aktiviert, falls die beiden Signale Querschutzl S_{q1} und Querschutz2 S_{q2} aktiv sind. Die Überwachung des Zustands Untersteuern mittels zweier getrennter Algorithmen in den Blöcken 108 und 109, und die gegenseitige Absicherung der Ergebnisse erhöht die Erkennungssicherheit. Dies ermöglicht zudem, die Schwellen für die Aktivierung der Signale Querschutzl S_{q1} und Querschutz2 S_{q2} niedriger zu wählen, als dies in einer vereinfachten Ausführungsform bei der Berücksichtigung von nur einem der beiden verwendeten Parametersätze möglich wäre.

Aus den Parametern Querbeschleunigung a_{y}, Giergeschwindigkeit V_{G} und Raddrehzahlen V_{R} wird in Block 111 ein Zustand Übersteuern überwacht. Hierzu wird der Schwimmwinkel berechnet, und falls dieser einen vorgebbaren Wert übersteigt, wird das Signal Querschutz-Schleudern S_{qs} aktiviert.

In Block 112 werden die Signale Längsschutz S₁, Querschutz-Untersteuern S_{qu} und Querschutz-Schleudern S_{qs} erfasst und bewertet. Falls eines der Signale aktiv ist, wird das entsprechende Schutzsystem in Block 113 angesteuert. Sind mehr als eines der Signale aktiv, so wird das Schutzsystem entsprechend der Bewertung in Block 112 angesteuert. Ist beispielsweise nur das Signal Längsschutz S₁ aktiv, so wird eine Kollision mit Impulsübertrag in Fahrtrichtung erwartet und die Insassen werden so vorkonditioniert, dass sie hierbei möglichst gering belastet werden, indem die Sitze nach hinten verschoben werden und ein reversibler Gurtstraffer angesteuert wird. Sind in einem anderen Beispiel die Signale Längsschutz S₁ und Querschutz-Übersteuern S_{qs} aktiv, wird auf eine primäre Gefährdung von einer Seite geschlossen und es wird anstelle der Längsverschiebung der Sitze, derjenige Sitz, welcher der Gefahrenseite zugewandt ist, zur anderen Seite hin verschoben, oder es werden in einem anderen Beispiel alle Sitze zur Mitte hin verschoben.

In einer alternativen Ausführungsform kann in Block 110 das Signal Querschutz-Untersteuern S_{qu} aktiv gesetzt werden, falls mindestens eines der beiden Signale Querschutzl S_{q1} und Querschutz2 S_{q2} aktiv sind. Hierdurch geht die Redundanz aus der weiter oben angegebenen Ausführungsform verloren. Diese Ausführungsform ist vorzuziehen, falls das angesteuerte Schutzmittel nicht oder nur in geringem Maße vom Fahrer oder den Insassen wahrgenommen wird, und somit nur eine vernachlässigbare Beeinträchtigung erzeugt. In diesem Fall kann auf eine Absicherung des Auslösezustands zugunsten einer häufigeren Auslösung verzichtet werden. In diesem Fall könnte auch nur eines der beiden Kriterien in den Blöcken 108 und 109 geprüft werden.

In einer anderen alternativen Ausführungsform wird in Block 111 zusätzlich der Lenkwinkel α_{L} erfasst. Aus dem Lenkwinkel α_{L} und den Raddrehzahlen V_{R} wird eine Sollgiergeschwindigkeit ermitteln. Übersteigt die Differenz aus der Sollgiergeschwindigkeit und der Giergeschwindigkeit einen vorgebbaren Wert, wird ebenfalls das Signal Querschutz-Schleudern S_{qs} aktiviert.

## Patentansprüche

1. Verfahren zum Ansteuern eines reversiblen Insassenschutzmittels (113) in einem Kraftfahrzeug mit einer Sensorik, welche Fahrzustandsdaten erfasst und einem reversiblen Insassenschutzmittel (113), welches vor dem Kollisionszeitpunkt ausgelöst und **dadurch** in Wirkstellung gebracht werden kann, wobei die Fahrzustandsdaten hinsichtlich fahrdynamisch kritischer Zustände überwacht werden und bei ermitteltem fahrkritischem Zustand das Insassenschutzsystem (113) ausgelöst wird, **dadurch gekennzeichnet, dass**
die Fahrzustandsdaten hinsichtlich eines Zustands Untersteuern (110) überwacht werden und bei ermitteltem Zustand Untersteuern (110) das Insassenschutzsystem (113) ausgelöst wird.

2. Verfahren nach Anspruch 1, **dadurch gekennzeichnet, dass** der Zustand Untersteuern (110) mittels einer Bewertung der Differenz aus einem Winkel, welcher eine Veränderung der tatsächlichen Fahrtrichtung beschreibt, und dem Lenkwinkel (α_{L}) ermittelt wird.

3. Verfahren nach Anspruch 2, **dadurch gekennzeichnet, dass** der Winkel, welcher eine Veränderung der tatsächlichen Fahrtrichtung beschreibt aus den Raddrehzahlen (v_{R}), der Querbeschleunigung (a_{y}) und dem Radstand ermittelt wird.

4. Verfahren nach Anspruch 2, **dadurch gekennzeichnet, dass** der Winkel, welcher eine Veränderung der tatsächlichen Fahrtrichtung beschreibt aus den Raddrehzahlen (V_{R}), der Giergeschwindigkeit (V_{G}) und dem Radstand ermittelt wird.

5. Verfahren nach einem der Ansprüche 2 bis 4, **dadurch gekennzeichnet, dass** der Winkel, welcher eine Veränderung der tatsächlichen Fahrtrichtung beschreibt, der Ackermannwinkel ist.

6. Verfahren nach Anspruch 5, **dadurch gekennzeichnet, dass** die Überwachung des Zustands Untersteuern mittels zweier getrennter Algorithmen erfolgt, welchen jeweils verschiedene Berechnungen des Ackermannwinkels zugrunde liegen, und das Ergebnis beider Algorithmen logisch verknüpft wird.

7. Verfahren nach Anspruch 1, **dadurch gekennzeichnet, dass** die Fahrzustandsdaten zusätzlich hinsichtlich eines Zustands Übersteuern (111) überwacht werden und auch bei ermitteltem Zustand Übersteuern das Insassenschutzsystem ausgelöst wird.

8. Verfahren nach Anspruch 7, **dadurch gekennzeichnet, dass** der Zustand Übersteuern (111) mittels einer Bewertung des Schwimmwinkels ermittelt wird, welcher insbesondere aus den Raddrehzahlen (V_{R}), der Giergeschwindigkeit (V_{G}) und der Querbeschleunigung (a_{y}) ermittelt wird.

9. Verfahren nach Anspruch 7, **dadurch gekennzeichnet, dass** zusätzlich der Lenkwinkel (α_{L}) erfasst wird und der Zustand Übersteuern (111) mittels einer Bewertung der Differenz aus einer Giergeschwindigkeit und einer Sollgiergeschwindigkeit, ermittelt wird.

10. Verfahren nach einem der Ansprüche 2 bis 9, **dadurch gekennzeichnet, dass** die Bewertung eine Schwellwertabfrage ist.

11. Verfahren nach einem der Ansprüche 2 bis 9, **dadurch gekennzeichnet, dass** die Bewertung unter Einbeziehung zurückliegender Werte erfolgt.

12. Verfahren nach einem der vorangehenden Ansprüche, **dadurch gekennzeichnet, dass** die Fahrzustandsdaten zusätzlich hinsichtlich eines Zustands Notbremsung (103) überwacht werden und auch bei ermitteltem Zustand Notbremsung das Insassenschutzsystem ausgelöst wird.

13. Verfahren nach Anspruch 1, **dadurch gekennzeichnet, dass** mittels der Zustände Notbremsung (103), Untersteuern (110) und Übersteuern (111) die Richtung ermittelt wird, aus welcher eine maximale Gefährdung zu erwarten ist, und das Insassenschutzsystem (113) derart angesteuert wird, dass die Schutzwirkung entsprechend der Richtung maximaler Gefährdung erfolgt.

14. Verfahren nach Anspruch 13, **dadurch gekennzeichnet, dass** die Geschwindigkeit des Kraftfahrzeugs ermittelt wird und die reversible Insassenschutzeinrichtung nur dann ausgelöst wird, wenn zusätzlich das Fahrzeug eine Mindestgeschwindigkeit aufweist.

15. Verfahren nach einem der Ansprüche 13 oder 14, **dadurch gekennzeichnet, dass** das Fahrzeug ein Bremsassistenzsystem aufweist, welches in vorgegebenen kritischen Situationen mittels eines Steuersignals einen Eingriff in das Bremssystem bewirkt, und dass zur Ermittlung des Zustands Notbremsung (103) das Steuersignal des Bremsassistenzsystems (101) herangezogen wird.

16. Verfahren nach Anspruch 15, **dadurch gekennzeichnet, dass** zur Ermittlung des Zustands Notbremsung (103) zusätzlich das Steuersignal eines Bremslichtschalters (102) herangezogen wird.

17. Verfahren nach einem der vorangehenden Ansprüche, **dadurch gekennzeichnet, dass** das Schutzsystem (113) eine elektrische Sitzverstellvorrichtung und/oder eine elektrische Verstellvorrichtung von Fahrzeugöffnungen und/oder ein reversibler Gurtstraffer und/oder eine elektrisch verstellbare Prallschutzvorrichtung ist.

## Claims

1. Method of activating a reversible passenger protection system (113) in a motor vehicle, having a sensor system which detects driving status data and a reversible passenger protection system (113) which is triggered prior to the instant of a collision and thus switched to an active position, whereby the driving status data is monitored with a view to determining critical states of driving dynamics, and the passenger protection system (113) is triggered when a critical driving state is detected,
**characterised in that**
the driving status data is monitored with a view to detecting a state of under-steering (110) and the passenger protection system (113) is triggered when a state of under-steering (110) is detected.

2. Method as claimed in claim 1, **characterised in that** the state of under-steering (110) is detected by evaluating the difference between an angle describing a change in the actual direction of travel and the steering angle (α_{L}).

3. Method as claimed in claim 2, **characterised in that** the angle describing a change in the actual direction of travel is determined from the wheel rotation speeds (v_{R}), lateral acceleration (a_{y}) and the wheel base.

4. Method as claimed in claim 2, **characterised in that** the angle describing a change in the actual direction of travel is determined from the wheel rotation speeds (V_{R}), the yaw speed (V_{G}) and the wheel base.

5. Method as claimed in one of claims 2 to 4, **characterised in that** the angle describing a change in the actual direction of travel is the Ackermann angle.

6. Method as claimed in claim 5, **characterised in that** the state of under-steering is monitored by means of two separate algorithms, each based on a different calculation of the Ackermann angle, and the result of the two algorithms is logically linked.

7. Method as claimed in claim 1, **characterised in that** the driving status data is additionally monitored with a view to detecting a state of over-steering (111) and the passenger protection system is also triggered if a state of over-steering is detected.

8. Method as claimed in claim 7, **characterised in that** the state of over-steering (111) is determined by evaluating the side slip angle, which is determined in particular on the basis of the wheel rotation speeds (v_{R}), the yaw speed (v_{G}) and lateral acceleration (a_{y}).

9. Method as claimed in claim 7, **characterised in that** the steering angle (α_{L}) is additionally detected and the state of over-steering (111) is determined by evaluating the difference between a yaw speed and a desired yaw speed.

10. Method as claimed in one of claims 2 to 9, **characterised in that** the evaluation is based on a sampling of threshold values.

11. Method as claimed in one of claims 2 to 9, **characterised in that** the evaluation is run by incorporating previous values.

12. Method as claimed in one of the preceding claims, **characterised in that** the driving status data is additionally monitored with a view to detecting a state of emergency braking (103) and the passenger protection system is also triggered if a state of emergency braking is detected.

13. Method as claimed in claim 1, **characterised in that** on the basis of the states of emergency braking (103), under-steering (110) and over-steering (111), the direction from which maximum danger can be anticipated is determined and the passenger protection system (113) is activated in such a way that the protective effect is concentrated on the direction of maximum danger.

14. Method as claimed in claim 13, **characterised in that** the speed of the motor vehicle is determined and the reversible passenger protection system is not triggered unless the vehicle is additionally travelling at a minimum speed.

15. Method as claimed in one of claims 13 or 14, **characterised in that** the vehicle has a brake-assist system which prompts an intervention in the brake system by means of a control signal in pre-defined critical situations, and the control signal is applied to the brake-assist system (101) in order to detect the state of emergency braking (103).

16. Method as claimed in claim 15, **characterised in that** the control signal of a brake light switch (102) is also used as a means of detecting the state of emergency braking (103).

17. Method as claimed in one of the preceding claims, **characterised in that** the protection system (113) is an electric seat adjusting system and/or an electric system for adjusting vehicle openings and/or a reversible belt tensioning device and/or an electrically adjustable impact protection system.

## Revendications

1. Procédé pour activer un moyen de protection réversible pour passagers (113) dans un véhicule automobile avec un capteur, qui enregistre des données d'état de conduite, et un moyen de protection réversible pour passagers (113), qui peut être déclenché avant l'instant de la collision et être amené ainsi en position active, les données d'état de conduite étant contrôlées en ce qui concerne des états critiques au niveau de la dynamique de conduite et le système de protection de passagers (113) étant déclenché lorsqu'un état critique de conduite a été déterminé, **caractérisé en ce que** les données d'état de conduite sont contrôlées en ce qui concerne un état de sous-virage et le système de protection de passagers (113) est déclenché lorsque l'état de sous-virage (110) est déterminé.

2. Procédé selon la revendication 1, **caractérisé en ce que** l'état de sous-virage (110) est déterminé au moyen d'une évaluation de la différence entre un angle, qui décrit une modification du sens de marche réel, et l'angle de braquage (α_{L}).

3. Procédé selon la revendication 2, **caractérisé en ce que** l'angle, qui décrit une modification du sens de marche réel, est déterminé à partir des régimes de roue (v_{R}), de l'accélération transversale (a_{y}) et de l'empattement.

4. Procédé selon la revendication 2, **caractérisé en ce que** l'angle, qui décrit une modification du sens de marche réel, est déterminé à partir des régimes de roue (v_{R}) de la vitesse de lacet (V_{G}) et de l'empattement.

5. Procédé selon l'une quelconque des revendications 2 à 4, **caractérisé en ce que** l'angle, qui décrit une modification du sens de marche réel, est l'angle d'Ackermann.

6. Procédé selon la revendication 5, **caractérisé en ce que** le contrôle de l'état de sous-virage s'effectue au moyen de deux algorithmes séparés, qui sont basés respectivement sur différents calculs de l'angle d'Ackermann, et le résultat des deux algorithmes est lié logiquement.

7. Procédé selon la revendication 1, **caractérisé en ce que** les données d'état de conduite sont contrôlées en supplément en ce qui concerne un état de survirage (111) et le système de protection des passagers est déclenché également lorsqu'un état de survirage est déterminé.

8. Procédé selon la revendication 7, **caractérisé en ce que** l'état de survirage (111) est déterminé au moyen d'une évaluation de l'angle de dérive, qui est déterminé en particulier à partir des régimes de roue (v_{R}), de la vitesse de lacet (V_{G}) et de l'accélération transversale (a_{y}).

9. Procédé selon la revendication 7, **caractérisé en ce qu'**en supplément l'angle de braquage (α_{L}) est enregistré et l'état de survirage (111) est déterminé au moyen d'une évaluation de la différence entre une vitesse de lacet et une vitesse de lacet théorique.

10. Procédé selon l'une quelconque des revendications 2 à 9, **caractérisé en ce que** l'évaluation est une interrogation de la valeur seuil.

11. Procédé selon l'une quelconque des revendications 2 à 9, **caractérisé en ce que** l'évaluation s'effectue en intégrant des valeurs antérieures.

12. Procédé selon l'une quelconque des revendications précédentes, **caractérisé en ce que** les données d'état de conduite sont contrôlées en supplément en ce qui concerne un état de freinage d'urgence (103) et le système de protection des passagers est déclenché même lorsque l'état de freinage d'urgence est déterminé.

13. Procédé selon la revendication 1, **caractérisé en ce que**, au moyen des états du freinage d'urgence (103), du sous-virage (110) et du survirage (111), on détermine la direction à partir de laquelle on peut escompter un risque maximum, et le système de protection des passagers (113) est activé de telle sorte que l'effet de protection intervient en fonction de la direction du risque maximum.

14. Procédé selon la revendication 13, **caractérisé en ce que** la vitesse du véhicule est déterminée et le dispositif de protection réversible pour passagers n'est déclenché que dans les cas où en supplément le véhicule présente une vitesse minimale.

15. Procédé selon l'une quelconque des revendications 13 à 14, **caractérisé en ce que** le véhicule présente un système d'assistance de freinage qui entraîne une intervention sur le système de freinage dans des situations critiques prédéfinies au moyen d'un signal de commande et **en ce que**, pour déterminer l'état du freinage d'urgence (103), le signal de commande du système d'assistance de freinage (101) est utilisé.

16. Procédé selon la revendication 15, **caractérisé en ce que**, pour déterminer l'état du freinage d'urgence (103), on utilise en supplément le signal de commande d'un commutateur de feu stop (62).

17. Procédé selon l'une quelconque des revendications précédentes, **caractérisé en ce que** le système de protection (113) est un dispositif de réglage électrique de siège et/ou un dispositif de réglage électrique d'ouvertures de véhicule et/ou un tendeur de sangle réversible et/ou un dispositif antichocs réglable électriquement.
